# EUROPEAN PATENT APPLICATION

(11) **EP 1 182 531 A2**
(43) Date of publication of application: **27.02.2002**
(21) Application number: 01102684.6
(22) Date of filing: 07.02.2001
(51) Int. Cl.: G06F 1/00

(54) **Personal verification in a public data network**

(30) Priority: 15.08.2000 US 638364
(71) Applicant: Hewlett-Packard Company, A Delaware Corporation, Palo Alto, CA 94304 (US)
(72) Inventor: Luman, David J., Meridian, ID 83642 (US)
(74) Representative: Schoppe, Fritz, Dipl.-Ing.

(57) **Abstract**

A computer system (110) verifies a user (101) over a public data network (102) to a third party (103) by transferring information (214) about the user (101) that has been independently verified. The computer system (110) receives and processes an order from the user (101) to establish verified user information (214). The computer system (210) later receives a request from the user (101) identifying a selected portion of the verified user information (214). In response, the computer system (110) associates a token with the selected portion of the verified user information (214) and transfers the token to the user (101). The user (101) then transfers their token to the third party (103), and the computer system (110) receives the token from the third party (103). In response, the computer system (110) transfers the selected portion of the verified user information (214) to the third party (103).

## Description

### Background of the Invention

### 1. Field of the Invention

The invention is related to the field of public data network systems, and in particular, to a verification computer system that provides verified user information over the public data network to third parties in a manner controlled by the user.

### 2. Statement of the Problem

Unfortunately, people are often placed in the position of trusting a relatively unknown individual. Typical examples of this situation are dating, hiring employees, or purchasing an expensive item from an individual. To mitigate the problem, various information may be obtained about the person in question. Banks may be contacted for credit records and ratings. Criminal histories may be obtained. Professional investigators routinely provide these verification services to interested parties.

With the expansion of public data networks like the Internet, the contact between unknown individuals is now commonplace. Web sites provide opportunities to purchase expensive items, set-up dates, or hire employees. The current services available for verifying information about an individual over public data networks are lacking. The individual does not retain adequate control over the level of information that is released or the third parties who receive the information.

There is no simple but effective way for an individual to use a public data network to establish independently verified information about themselves, and then to disclose different levels of verified information to third parties based on the appropriate level of disclosure in each situation. There is a need for a personal verification system for use on public data networks that is simple to use, but effective in providing the trust that is needed when unknown individuals deal with one another.

### Summary of the Solution

The invention helps solve the above problems with computer systems and software that provide personal verification over public data networks, such as the Internet. The computer system is easy to use and is effective in providing independently verified information about a user to a third party. Advantageously, the computer system allows the user to control what information is provided and who receives it.

The computer system allows a user to use a public data network to establish independently verified information about themselves, and then to disclose differing levels of the verified user information to third parties based on the appropriate level of disclosure in each situation. The user may provide a comprehensive disclosure of verified user information, or the user may choose to disclose only a few necessary pieces of verified user information.

The verification computer system receives and processes an order from the user to establish verified user information. After the user information is independently verified, the computer system receives a request from the user identifying a selected portion of the verified user information. In response, the computer system associates a token with the selected portion of the verified user information and transfers the token to the user. The user then transfers their token to the third party, and the computer system receives the token from the third party. In response, the computer system transfers the selected portion of the verified user information to the third party.

### Description of the Drawings

The same reference number represents the same element on all drawings.

FIG. 1 is a block diagram that illustrates the operating environment for a verification computer system in an example of the invention.

FIG. 2 is a block diagram that illustrates the verification computer system in an example of the invention.

FIG. 3 is an illustration of a main menu web page for the verification computer system in an example of the invention.

FIG. 4 is an illustration of a user account ordering web page for the verification computer system in an example of the invention.

FIG. 5 is an illustration of a user token web page for the verification computer system in an example of the invention.

FIG. 6 is an illustration of a user verification web page for the verification computer system in an example of the invention.

FIG. 7 is a flow diagram that illustrates the operation of the verification computer system in an example of the invention.

FIG. 8 is a flow diagram that illustrates the operation of the verification computer system in an example of the invention.

### Detailed Description of the Invention

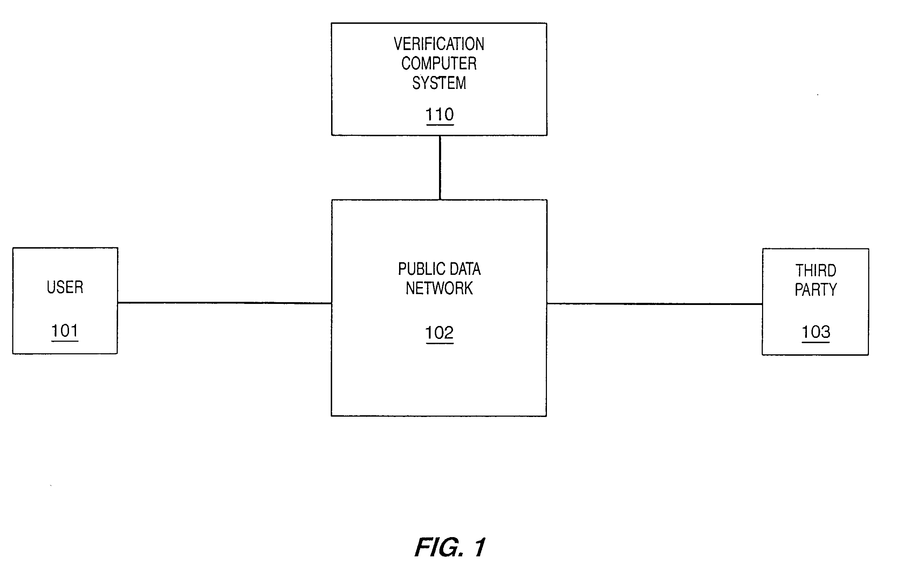

### Verification Computer System - FIGS. 1-2

FIGS. 1-2 depict a specific example of a verification computer system in accord with the present invention. Those skilled in the art will appreciate numerous variations from this example that do not depart from the scope of the invention. Those skilled in the art will also appreciate that the features described could be combined in various ways to form multiple variations of the invention. Those skilled in the art will appreciate that some conventional aspects of FIGS. 1-2 have been simplified or omitted for clarity.

FIG. 1 is a block diagram that illustrates the operating environment for verification computer system 110 in an example of the invention. User 101, third party 103, and verification computer system 110 are each configured to communicate over public data network 102. Public data network 102 could be the Internet or some other public data network that offers data communication services to the public. For example, user 101 and third party 103 may operate personal computers that execute web browser software to access the Internet through an Internet Service Provider. Typically, there are many other users and third parties who use verification computer system 110, but the number shown is restricted for clarity.

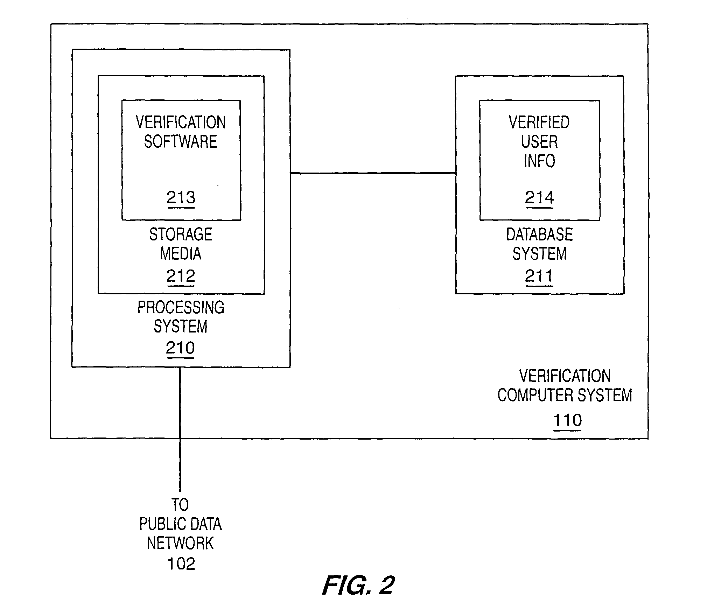

FIG. 2 is a block diagram that illustrates verification computer system 110 in an example of the invention. Verification computer system 110 comprises processing system 210 and database system 211. Processing system 210 communicates with public data network 102 and database system 211. Processing system 210 includes storage media 212 that stores verification software 213. Database system 211 houses verified user information 214.

Processing system 210 includes computer circuitry to read and execute verification software 213 from storage media 212. Storage media 212 could be disks, integrated circuits, tapes, servers, or some other type of memory device. Verification software 213 could be any processor-readable instructions, including firmware, that are operational when executed by processing system 210 to direct processing system 210 to operate in accord with the invention. Under the control of verification software 213, processing system 210 retrieves and manipulates verified user information 214 from database system 211. Database system 211 could include disks, integrated circuits, tapes, servers, or some other type of memory device.

Verified user information 214 includes accurate information about user 101 that third party 103 would find helpful when dealing with user 101. The term "verified" means that the user information is verified independently from user 101 -- even if user 101 initially provides the information. Professional investigation services appreciate how to verify the accuracy of user information independently from the user. Verification techniques typically include personal interviews and record checks.

Verified user information 214 could include categories for general personal data, financial data, employment history, educational history, residential history, legal records, or some other type of data related to the user. General personal data might include contact information and demographic information. Financial data might include bank accounts, assets, income, debt, credit problems, and payment history. Employment history might describe work experience including titles, job descriptions, and references. Educational history might describe various schools attended, degrees and honors obtained, and other transcript information. Residential history might include a listing of previous residential addresses. Legal records might indicate any criminal history, judgments and awards, or legal problems.

If desired, verified user information 214 could also include ratings. Ratings could be provided by those offering the verification service. For example, a user might obtain a trustworthy rating if their verification process yields positive results. The ratings of external institutions, such as banks and schools, may also be included.

Verification computer system 110 operates as follows. Processing system 210 receives and processes an order over public data network 102 from user 101 to establish verified user information 214. During the order process, user 101 typically inputs personal information which is independently verified as accurate by a reputable independent investigation service. User 101 is then notified, possibly by e-mail, that verification is complete. User 101 also receives a confidential user identification (ID).

User 101 eventually has dealings with third party 103 where verification would be helpful. For example, user 101 might try to sell an expensive boat to third party 103 over an auction-type web site. To facilitate this transaction, user 101 requests a token from verification computer system 110. Processing system 210 receives the request from user 101 over public data network 102. The request includes the user ID. Processing system 210 processes the user ID to provide access to verified user information 214.

Processing system 210 then receives a selection from the user over public data network 102 that indicates a selected portion of verified user information 214 that user 101 desires to expose to third party 103. The selection may indicate selected categories of verified user information 214. The selection may indicate allowed deletions or edits of verified user information 214. The selection may indicate allowed deletions or edits of verified user information 214 in selected categories. Other techniques for user 101 to select a portion of verified user information 214 over public data network 102 are also applicable.

Once the selected portion of verified user information 214 is formed, processing system 210 associates the token with the selected portion of verified user information 214 and transfers the token to user 101 over public data network 102. The token could be any code that identifies the selected portion of verified user information 214 within computer system 110. User 101 then provides the token, possibly by e-mail, to third party 103 for verification purposes. Processing system 210 receives the token from third party 103 over public data network 102. In response, processing system 102 transfers the selected portion of verified user information 214 to third party 103 over public data network 102. The selected portion of verified user information 214 may include verification date information for the selected portion of the verified user information that indicates the time period since the information was verified.

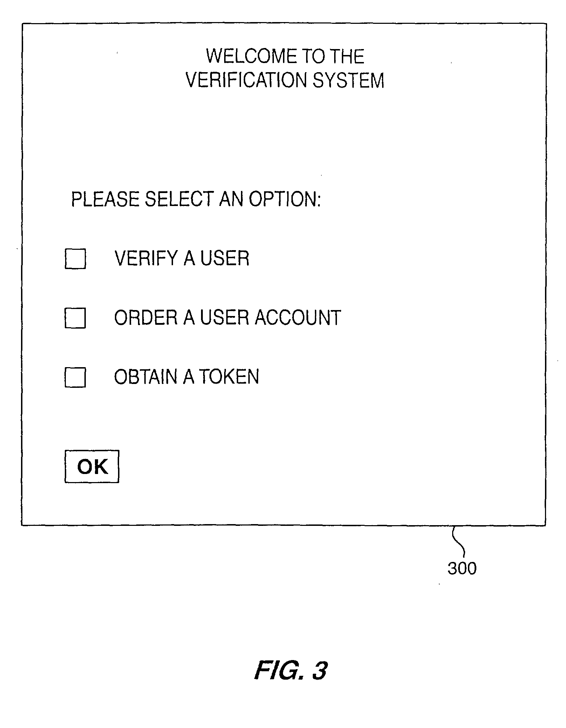

### Verification Computer System Web Pages - FIGS. 3-6

FIGS. 3-6 depict a specific example of web pages for the verification computer system in accord with the present invention. Those skilled in the art will appreciate numerous variations from this example that do not depart from the scope of the invention. Those skilled in the art will also appreciate that the features described could be combined in various ways to form multiple variations of the invention. Those skilled in the art will appreciate that some conventional aspects of FIGS. 3-6 have been simplified or omitted for clarity.

FIG. 3 is an illustration of a main menu web page 300 for verification computer system 110 in an example of the invention. Main menu page 300 is the first page presented and it provides a welcome message. Main menu page 300 has selection boxes for three options: 1) verify a user, 2) order a user account, and 3) obtain a token. An OK button implements the user selections.

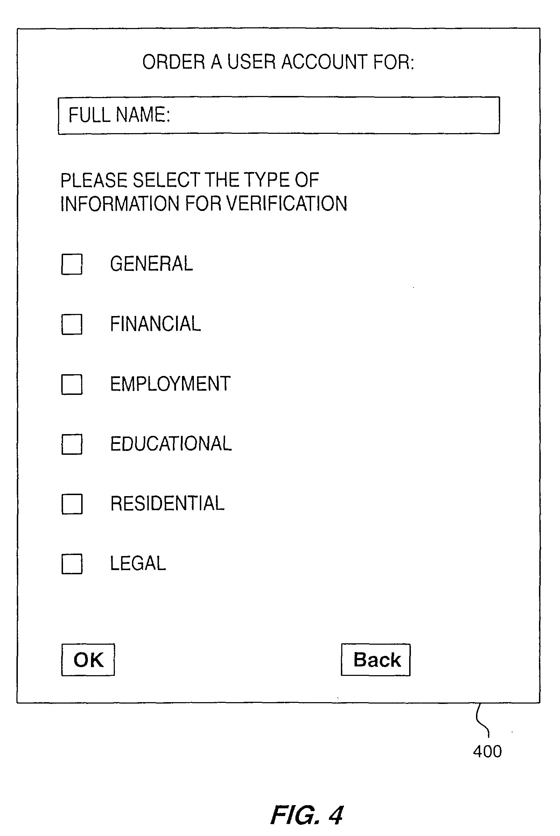

FIG. 4 is an illustration of a user account ordering web page 400 for verification computer system 110 in an example of the invention. Account ordering page 400 is provided in response to the corresponding selection from main menu page 300. Account ordering page 400 includes a text entry box to collect the prospective user's name. Account ordering page 400 has selection boxes for the various categories of user information - general, financial, employment, educational, residential, legal, and ratings. OK and back buttons are provided to implement user selections or return to main menu page 300. Additional web pages would follow to collect information for the selected categories, provide a cost quotation, obtain payment information, and obtain an acceptance of terms.

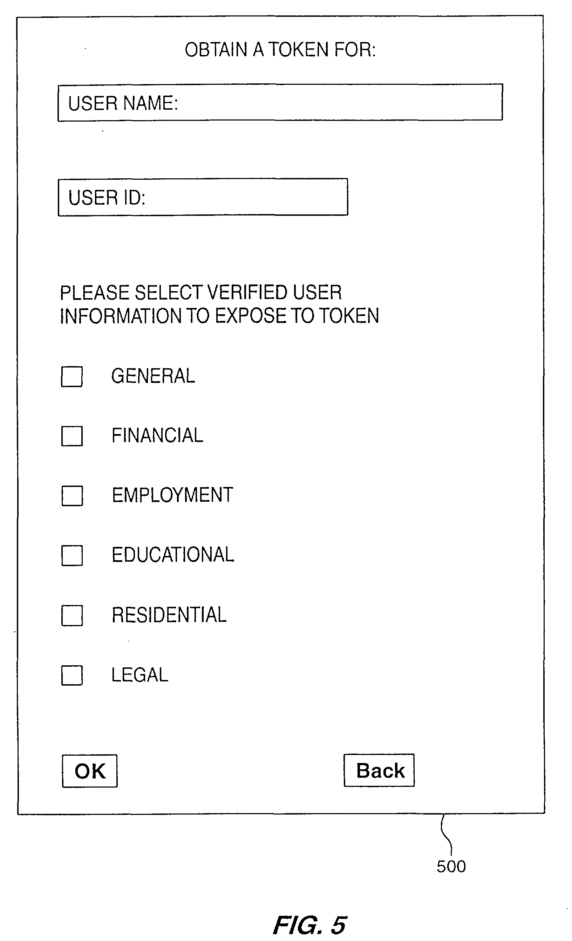

FIG. 5 is an illustration of user token web page 500 for verification computer system 110 in an example of the invention. Token page 500 is provided in response to the corresponding selection from main menu page 300. Token page 500 allows user 101 to select a portion of their verified user information 214 and receive a corresponding token. Token page 500 includes text entry boxes to collect the user's name and ID. Token page 500 has selection boxes for the various categories of user information - general, financial, employment, educational, residential, legal, and ratings. OK and back buttons are provided to implement user selections or return to main menu page 300. Additional web pages would follow to preview and possibly edit verified user information 214 from the selected categories.

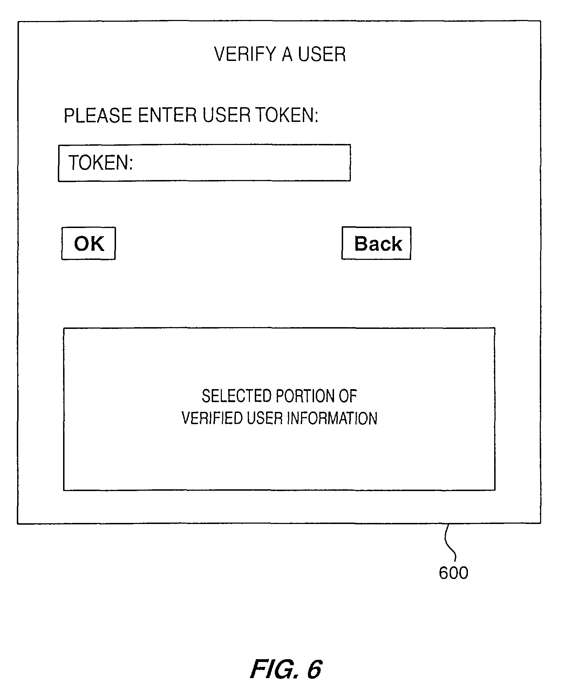

FIG. 6 is an illustration of user verification web page 600 for verification computer system 110 in an example of the invention. Verification page 600 is provided in response to the corresponding selection from main menu page 300 and is used by third party 103 to verify user 101. Verification page 600 includes a text entry box to collect the token from third party 103. OK and back buttons are provided to implement third party selections or return to main menu page 300. After computer system 110 processes the token, the selected portion of verified user information 214 that corresponds to the token is presented in a view box.

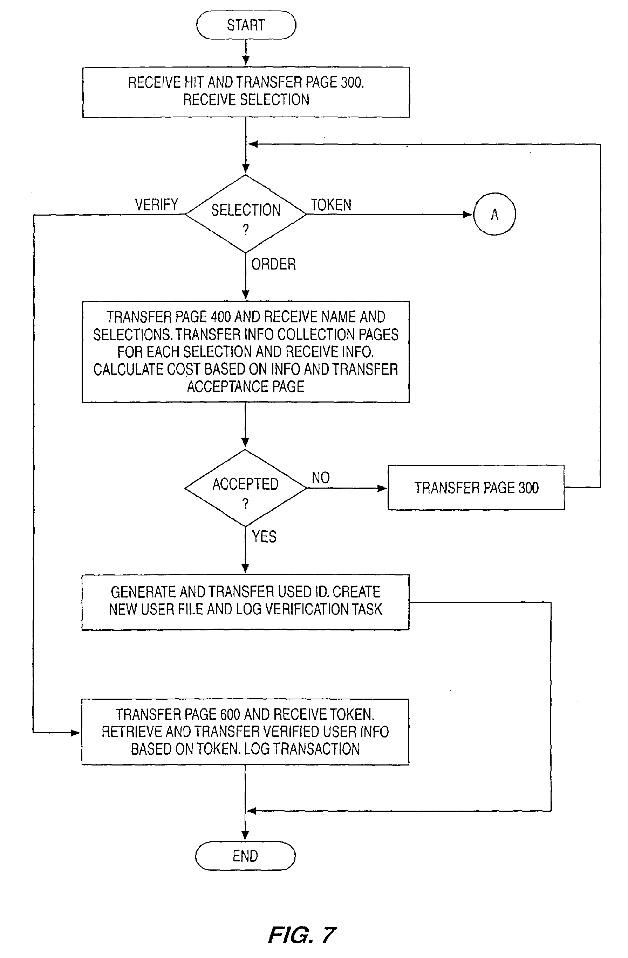

### Verification Computer System Software - FIGS. 7-8

FIGS. 7-8 depict a specific example of the operation of a verification computer system in accord with the present invention. Those skilled in the art will appreciate numerous variations from this example that do not depart from the scope of the invention. Those skilled in the art will also appreciate that the features described could be combined in various ways to form multiple variations of the invention. Those skilled in the art will appreciate that some conventional aspects of FIGS. 7-8 have been simplified or omitted for clarity.

FIGS. 7-8 are flow diagrams that illustrate the operation of verification computer system 110 in an example of the invention. The operation is controlled by verification software 213 that is executed by processing system 210. Main menu 300 page is returned in response to an initial hit, and a selection from main menu page 300 is typically received.

If the selection is an order, then account order page 400 is transferred to collect the prospective user's name and order selections. Pages to collect information for each selected category are provided. After data collection for each selected category is complete, then the cost is calculated and provided along with other acceptance terms and payment instructions. Cost calculations are typically based on the amount and type of user information requiring verification. If the terms are not accepted or payment is not made, then main menu page 300 is transferred. If the terms are accepted and payment is made, then a confidential user ID is generated and transferred. The new user file is created and the new verification task is logged. Investigators verify the new user's information based on the logged task. This order procedure can be readily adapted to provide an updating mechanism for existing users.

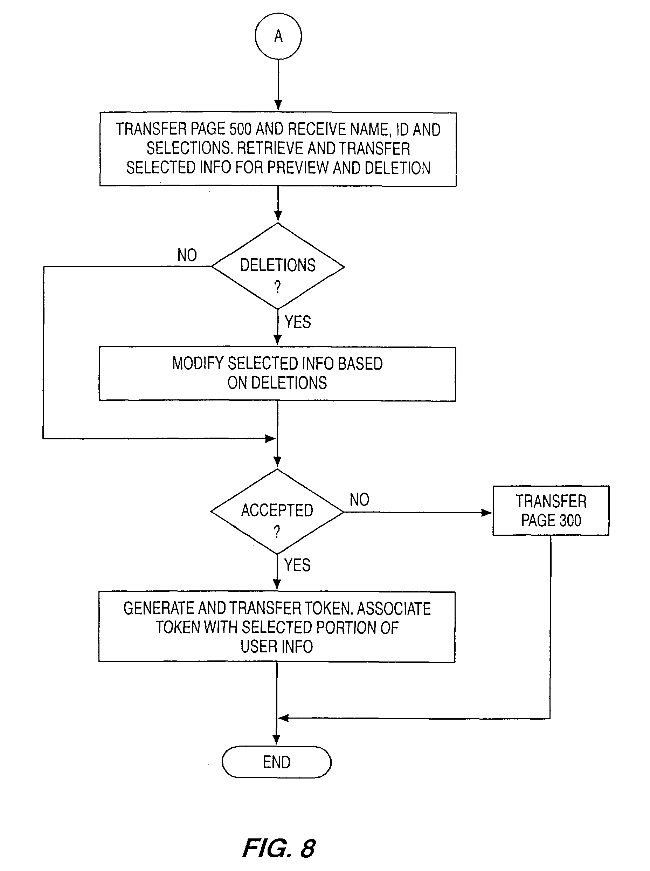

If obtain a token is selected from main menu page 300, then token page 500 is transferred. (See FIG. 8). The user name, ID, and selections are received, and verified user information 214 from the selected categories is transferred. User 101 may then preview and possibly delete certain information, although deletion may not be allowed for some areas such as criminal history. If the resulting version of verified user information 412 is not accepted, then main menu page 300 is transferred. If the resulting version verified user information 412 is accepted, then the indicated deletions are made to form the selected portion of verified user information 214. A token is generated and transferred. The token is associated with the selected portion of verified user information 214.

If verify a user is selected from main menu page 300 (See FIG. 7), then verification page 600 is transferred. The token is collected and the selected potion of verified user information 214 that corresponds to the token is transferred. When complete, the transaction is logged.

Those skilled in the art will appreciate variations of the above-described embodiments that fall within the scope of the invention. For example, encryption techniques may be employed to transfer some information over public data network 102. Account and token expiration time periods may be implemented to clear out old information. Other forms of user verification, such as fingerprints and voice prints could be implemented. As a result, the invention is not limited to the specific examples and illustrations discussed above, but only by the following claims and their equivalents.

## Claims

1. A method for verifying a user (101) over a public data network (102), the method comprising:
receiving a request over the public data network (102) from the user (101) identifying a selected portion of verified user information (214);
in response to the receiving the request, associating a token with the selected portion of the verified user information (214) and transferring the token to the user (101) over the public data network (102);
receiving the token from a third party (103) over the public data network (102); and
in response to receiving the token, transferring the selected portion of the verified user information (214) to the third party (103) over the public data network (102).

2. The method of claim 1 further comprising receiving and processing an order over the public data network (102) from the user (101) to establish the verified user information (214).

3. The method of claim 1 wherein receiving the request comprises receiving selected categories of the verified personal information (214) from the user (101) over the public data network (102) to form the selected portion of the verified personal information (214).

4. The method of claim 1 further comprising transferring the verified user information (214) to the user (101) over the public data network (102), and in response, receiving edited versions of the verified user information (214) from the (101) user over the public data network (102) to form the selected portion of the verified user information (214).

5. The method of claim 1 wherein transferring the selected portion of the verified user information (214) to the third party (103) over the public data network (102) comprises transferring verification date information for the selected portion of the verified user information (214).

6. A computer system (110) for verifying a user (101) over a public data network (102), the computer system (110) comprising:
a processing system (210) configured to receive a request from the user (101) over the public data network (102) identifying a selected portion of verified user information (214), and in response, associate a token with the selected portion of the verified user information (214) and transfer the token to the user (101) over the public data network (102), and to receive the token from a third party (103) over the public data network (102), and in response, transfer the selected portion of the verified user information (214) to the third party (103) over the public data network (102); and
a database system (211) coupled to the processing system (210) and configured to store the verified user information (214).

7. The computer system of claim 6 wherein the processing system (210) is configured to receive and process an order over the public data network (102) from the user (101) to establish the verified user information (214).

8. The computer system (110) of claim 6 wherein the processing system (210) is configured to receive selected categories of the verified personal information (214) from the user (101) over the public data network (102) to form the selected portion of the verified personal information (214).

9. The computer system (110) of claim 6 wherein the processing system (210) is configured to transfer the verified user information (214) to the user (101) over the public data network (102), and in response, receive edited versions of the verified user information (102) from the user (101) over the public data network (102) to form the selected portion of the verified user information (214).

10. The computer system (110) of claim 6 wherein the processing system (210) is configured to transfer verification date information for the selected portion of the verified user information (214) to the third party (103) over the public data network (102).
